Europäisches Patentamt

European Patent Office

Office européen des brevets

(19)

(11) Veröffentlichungsnummer: **0 005 201**
**A1**

(12) # EUROPÄISCHE PATENTANMELDUNG

(21) Anmeldenummer: 79101150.5

(22) Anmeldetag: 17.04.79

(51) Int. Cl.²: **D 21 H 3/12,** C 07 C 103/00

(30) Priorität: 29.04.78 DE 2819039

(43) Veröffentlichungstag der Anmeldung: 14.11.79
Patentblatt 79/23

(84) Benannte Vertragsstaaten: **BE CH DE FR GB IT NL SE**

(71) Anmelder: **BAYER Aktiengesellschaft, Zentralbereich Patente,Marken und Lizenzen Bayerwerk, D-5090 Leverkusen 1 (DE)**

(72) Erfinder: **von Bonin, Wulf, Dr., Mendelssohnstrasse 30, D-5090 Leverkusen 1 (DE)**
Erfinder: **Müller, Friedhelm, Dr., Zum Hahnenberg 62, D-5068 Odenthal (DE)**
Erfinder: **Bäumgen, Heinz, Buchenweg 10, D-5090 Leverkusen 1 (DE)**

(54) **Leimungsmittel für Papier.**

(57) Leimungsmittel für Papier in Form einer wässrigen Zubereitung von Salzen und/oder Quarternierungsprodukten von basischen Fettsäureamiden, die sich von Fettsäuren mit Schmelzpunkten von über 30° C ableiten.

EP 0 005 201 A1

00005201

- 1 -

BAYER AKTIENGESELLSCHAFT    5090 Leverkusen, Bayerwerk
Zentralbereich
Patente, Marken und Lizenzen    Kb-kl-Kü

## Leimungsmittel für Papier

Die vorliegende Erfindung betrifft Leimungsmittel für Papier in Form einer wäßrigen Zubereitung von Salzen und/oder Quarternierungsprodukten von basischen Fettsäureamiden, die sich von Fettsäuren mit Schmelzpunkten von über 30°C ableiten.

Als konventionelles Masseleimungsmittel für Papier werden die sogenannten Harzleime auf Abietinsäurebasis verwendet. Da diese Leimungsmittel jedoch nicht allen Ansprüchen genügen, z.B., indem sie Alaun als Zusatzmittel erfordern, hat man inzwischen andere, nicht auf den Zusatz von Alaun angewiesene Masseleimungsmittel entwickelt, wie z.B. Fettsäureanhydride bzw. Ketene, Isocyanate oder Chlorcarbonylderivate von Fettsäuren. Allen diesen Leimungsmitteln ist gemeinsam, daß sie schwierig emulgierbar sind, daß meistens kationische

Le A 18 849 - Europa

- 2 -

Zusatzstoffe mitverwendet werden müssen, um eine zufriedenstellende Leimung zu erzielen, und daß diese
Leimungsmittel in wäßriger Emulsion nur beschränkt
lagerfähig sind, da die Keten-, Anhydrid- oder Isocyanatgruppen wasserempfindlich sind. Auch Stearinsäure oder Umsetzungprodukte von aliphatischen Aminen
mit Maleinanhydrid sind als Masseleimungsmittel verwendbar, erreichen aber gute Wirksamkeiten nur bei hohen Einsatzmengen  bzw. erfordern Alaunzusätze.

Gemäß DOS 1 771 243 können auch Umsetzungsprodukte aus
polymeren Fettsäuren und Polyaminen, wenn sie mit
einer genau definierten Menge Epichlorhydrin umgesetzt werden, als Masseleimungsmittel verwendet werden. Der Masseleimungseffekt ist jedoch bei diesen
Substanzen nur schwach ausgebildet, während sie sich
gut für die Oberflächenleimung eignen.

Es wurde nun gefunden, daß sich basische Amide von
bei Raumtemperatur festen $C_{10}$-$C_{26}$-Fettsäuren, insbesondere von $C_{12}$-$C_{18}$-Fettsäuren wie Laurin-, Myristin-,
Palmitin- und Stearinsäure, wobei letztere bevorzugt
ist, in Form ihrer Salze oder Quarternierungsprodukte
hervorragend als  Leimungsmittel, insbesondere als
Masseleimungsmittel, eignen. Sie werden als wäßrige
Lösungen, Suspensionen oder Emulsionen, gegebenenfalls
im Gemisch mit anderen Leimungsmitteln, eingesetzt.
Wie gefunden wurde, führen die entsprechenden Verbindungen, z.B. bei Verwendung der bei Raumtemperatur
festen Stearinsäure, zu einem guten Masseleimungsmittel, während analoge, unter Verwendung der bei Raum-

Le A 18 849

temperatur flüssigen Ölsäure hergestellte Verbindungen
so gut wie nicht wirksam sind.

Gegenstand der Erfindung sind Leimungsmittel für Papier in Form einer wäßrigen Zubereitung von Salzen und/oder Quarternierungsprodukten von basischen Fettsäureamiden, die sich von Fettsäuren mit Schmelzpunkten von über 30$^\circ$C ableiten.

Besonders bevorzugt sind die Umsetzungsprodukte der basischen Amide mit Epichlorhydrin.

Geeignet als Fettsäurebasis sind Fettsäuren oder Fettsäuregemische mit 10 - 26, bevorzugt 12 - 18 C-Atomen und Schmelzpunkten über 30$^\circ$C, insbesondere Stearinsäure bzw. Stearinsäure enthaltende Fettsäuregemische. Es können jedoch auch andere Fettsäuren wie etwa Palmitin-, Abietin-, Arachin- und Behensäure oder sonstige durch Oxosynthese o.ä. Verfahren zugängliche Fettsäuren in Betracht gezogen werden.

Als Amine oder Amingemische zur Herstellung der basischen Fettsäureamide kommen vorzugsweise Äthylendiamin und dessen Oligomere in Betracht, wie etwa Diäthylentriamin, Triäthylentetramin, Tetraäthylenpentamin usw. Geeignet sind auch die entsprechenden Amine auf Basis Propylendiamin, aber auch sonstige Alkyl- oder Aryldiamine oder -Polyamine, wie z.B. 1,4-Diaminobutan oder deren Isomere, Hexamethylendiamin oder deren Isomere, Toluylendiamin und Bisaminocyclohexan. Von besonderem Interesse sind Alkylierungsprodukte von Äthylendiamin, Propylendiamin und deren Oligomeren wie z.B. Bis-(aminoäthyl)-methylamin, -äthylamin und -cyclohexylamin und insbesondere Bis-(3-aminopropyl)-methylamin und -äthylamin.

Le A 18 849

- 4 -

Als Säuren für die Herstellung der Salze aus den basischen Fettsäureamiden kommen vorzugsweise aliphatische Carbonsäuren wie z.B. Ameisensäure und Essigsäure in Betracht, es sind aber auch anorganische Säuren verwendbar, wie z.B. Salzsäure, Phosphorsäure und Schwefelsäure, wobei im Gegensatz zu den anorganischen Säuren die organischen Säuren wenig korrosiv und entweder leicht flüchtig sind oder, wie z.B. Oxal- oder Maleinsäure, harmlose Salze mit den Füllstoffen des Papiers bilden.

Für die Überführung in Quarternierungsprodukte verwendet man vorzugsweise Epichlorhydrin, es sind jedoch auch andere Quarternierungsmittel in Betracht zu ziehen, wie etwa Dimethyl- oder Diäthylsulfat, Chloracetamid, Alkyl- und Benzylhalogenide wie Äthylchlorid und Benzylchlorid, Epoxide und Halogenessigsäureester.

Die für die Salzbildung bzw. Quarternierung eingesetzte Menge an Säure oder Quarternierungsmittel kann zwischen 30 und über 300 % der stöchiometrisch erforderlichen Menge schwanken. Vorzugsweise verwendet werden 50 - 250 % der stöchiometrisch erforderlichen Mengen.

Bezogen auf die eingesetzte Aminmenge, werden die Fettsäuren zur Darstellung der erfindungsgemäßen Leimungsmittel in solchen Mengen eingesetzt, daß das resultierende basische Amid pro Molekül noch mindestens eine basische Aminogruppe enthält, d.h. z.B., werden pro Mol

Le A 18 849

- 5 -

Äthylendiamin ein Mol Stearinsäure, pro Mol Triäthylentetramin zwei bis drei Mol Stearinsäure zur Reaktion gebracht.

Die Herstellung der basischen Amide kann nach verschiedenen, dem Fachmann geläufigen Methoden erfolgen, beispielsweise sehr einfach dadurch, daß man stöchiometrisch berechnete Mengen Stearinsäure und Amin,gegebenenfalls unter Stickstoff,auf 180°C erhitzt und das bei der Amidbildung entstehende Wasser langsam abdestilliert.

Anschließend kann die Schmelze des entstandenen basischen Amids nach Abkühlung auf einen geeigneten Temperaturbereich, z.B. in der Nähe des Schmelzpunktes des Amids, mit dem Quarternierungsmittel bzw. der Säure umgesetzt werden und wird dann, vorzugsweise noch warm, mit der gewünschten Menge Wasser versetzt und in eine Lösung, Suspension oder Emulsion übergeführt. Das geschieht im allgemeinen durch einfaches Rühren,gegebenenfalls auch unter Einsatz mechanischer Emulgiervorrichtungen. Die erhaltenen gebrauchsfertigen wäßrigen Zubereitungen der Leimungsmittel haben Feststoffkonzentrationen von 1 bis 45, vorzugsweise von 5 bis 25 Gew.-%. Diese Zubereitungen werden bei ihrer Anwendung auf die dann erforderlichen Konzentrationen weiter verdünnt, z.B. auf Konzentrationen unter 0,5 Gew.-%, wie sie bei der Papierleimung üblich sind.

Die erfindungsgemäßen Leimungsmittel haben den Vorteil,

Le A 18 849

- 6 -

bei sehr guter Wirksamkeit in Form ihrer wäßrigen Zubereitungen unbegrenzt lagerstabil zu sein, sowie i.a. keine Zusätze von Alaun oder einem kationischen Hilfsmittel zu erfordern. Die wäßrigen Zubereitungen lassen sich zudem ohne Emulgierhilfsmittel herstellen. Die Leimungsmittel sind besonders gut geeignet zur Masseleimung von Papier, können selbstverständlich aber auch zur Oberflächenleimung eingesetzt werden. Sie können nicht nur bei kreidehaltigen Papieren verwendet werden, sondern auch bei solchen, die keinen oder einen andersartigen Füllstoff enthalten, wie z.B. Kaolin, Talkum oder Gips. Ebenso sind sie zur Leimung von Pappe, Karton oder Holzspanplatten bzw. Dämmplatten geeignet.

Im folgenden soll die Erfindung beispielhaft erläutert werden; die angegebenen Teile und Prozente beziehen sich auf das Gewicht, sofern nicht anderes vermerkt ist.

Le A 18 849

- 7 -

Beispiel 1
Leimungsmittel 1

180 Teile Äthylendiamin werden mit 284 Teilen Stearinsäure unter Rückfluß ca. 8 h erhitzt. Dann wird unter Stickstoff bei einer Badtemperatur von ca. 160°C von flüchtigen Anteilen abdestilliert. Anschließend wird für ca. 10 Min. Wasserstrahlvakuum angelegt, wobei der Rest flüchtiger Anteile abdestilliert. Es hinterbleiben 325 Teile des gewünschten basischen Stearylamids.

32,6 Teile des Amids werden in 100 Teilen Aceton mit 12,2 Teilen Epichlorhydrin unter Rückfluß gekocht. Nach 20-stündiger Reaktion werden 238 Teile auf 60°C erhitztes Wasser hinzugerührt, wobei sich eine trübe Lösung bildet. Man destilliert das Aceton ab und erhält eine ca. 15 % wäßrige Zubereitung des Leimungsmittels.

Beispiel 2
Leimungsmittel 2

146 Teile Triäthylentetramin werden mit 569 Teilen Stearinsäure unter Stickstoff 5 h auf 180°C unter Rückfluß erhitzt. Dann wird unter gutem Rühren alles bei dieser Temperatur Flüchtige abdestilliert. Man läßt nun auf 95°C abkühlen und fügt eine Lösung von 90 Teilen Essigsäure in 5210 Teilen Wasser, das auf ca. 90°C vorerhitzt wurde, unter gutem Rühren zu dem gebildeten basischen Amid hinzu. Es bildet sich eine

Le A 18 849

- 8 -

Emulsion, die unter Rühren abgekühlt wird. Sie kann direkt als Leimungsmittel eingesetzt werden. Der Festgehalt beträgt ca. 10 %.

Beispiel 3

Leimungsmittel 3

146 Teile Triäthylentetramin werden mit 854 Teilen Stearinsäure wie in Beispiel 2 zum basischen Amid umgesetzt. Es wird analog unter Zusatz von 60 Teilen Ameisensäure und 8454 Teilen Wasser in eine ca. 10 %ige Emulsion des Leimungsmittels 3 überführt.

Beispiel 4

Leimungsmittel 4

145 Teile Bis-(3-aminopropyl)-methylamin werden mit 569 Teilen Stearinsäure unter Stickstoff 5 h auf 185°C unter Rückfluß erhitzt. Dann destilliert man bei dieser Temperatur alles Flüchtige unter $N_2$ ab. Das so erhaltene basische Amid wird in 1,5 %iger wäßriger Essigsäure zu einer 10 %igen Leimungsmittellösung aufgelöst. Die Lösung ist klar.

Beispiel 5

Leimungsmittel 5

Das gemäß Beispiel 4 erhaltene basische Amid wird in

Le A 18 849

der Schmelze bei ca. 125°C mit 90 Teilen Epichlorhydrin langsam unter gutem Rühren versetzt. Nach 5 Min. Rühren läßt man die Mischung bei 75°C über Nacht stehen, wobei sie kristallisiert. Dann wird abgekühlt und in einer Mühle auf Korngrößen von ca. 1 - 3 mm Ø zerkleinert. Aus diesem Pulver wird nach Zusatz von Wasser eine ca. 20 %ige Emulsion mit Hilfe einer hochtourigen Mischsirene hergestellt. Diese erhaltene Emulsion ist stabil und kann als Leimungsmittel eingesetzt werden.

Beispiel 6

Leimungsmittel 6

204 Teile Bis-(3-aminopropyl)-cyclohexylamin werden gemäß Beispiel 4 mit 569 Teilen Stearinsäure zum basischen Amid umgesetzt. Die Schmelze des Amids wird mit 60 Teilen Essigsäure verrührt, dann läßt man abkühlen und erstarren. Anschließend wird analog Beispiel 5 gepulvert und in eine ca. 10 %ige Leimungsmittelemulsion überführt.

Als Beurteilungskriterium für die Leimungsmittel wird die sogenannte Tintenschwimmprobe benutzt: Man legt einen mit dem zu testenden Mittel ausgerüsteten Papierstreifen auf die Oberfläche einer mit Normtinte gemäß DIN 53 126 gefüllten Schale und prüft die Zeit, die vergeht, bis die Tinte auf die dem Betrachter zugekehrte Oberseite des aufgelegten Papiers durchschlägt. Dieser Test liefert bei standardisierter Durchführung eine gute Beurteilungsmöglichkeit für verschiedene Leimungsmittel.

Le A 18 849

Die erfindungsgemäßen Leimungsmittel sind gegenüber den Reaktivleimungsmitteln des Standes der Technik nahezu unbegrenzt in wäßriger Zubereitung lagerstabil und somit technisch vorteilhaft. Der Vergleich mit Harzleim zeigt als weiteren technischen Vorteil der erfindungsgemäßen Leimungsmittel deren gute Wirksamkeit. Ein noch wesentlicherer Vorteil ergibt sich daraus, daß die Leimungsmittel auf alaunfreien und kreidehaltigen Papieren, auf denen Harzleim nur wenig wirksam ist, ihre gute Wirksamkeit entfalten. Die erfindungsgemäßen Leimungsmittel werden daher auch beispielhaft auf alaunfreiem, kreidehaltigen Papier geprüft.

In 200 ml Leitungswasser werden 5 g einer Mischung aus 50 g Fichten-Sulfitzellstoff, 50 g Buchen-Sulfatzellstoff und 25 g Kreide aufgeschlämmt. Dann werden X % des Leimungsmittels (Feststoff bezogen auf Zellstoff plus Füllstoff) hinzugerührt. Dann wird ohne Zusatz eines Fixiermittels mit Wasser auf ca. 1 Liter aufgefüllt und auf einem Blattbildner das Papierblatt hergestellt. Dieses wird abgesaugt, abgepreßt und auf einem Trockenzylinder bei 100°C 5 Min. getrocknet. Aus dem Blatt werden für die Tintenschwimmprobe Streifen (2 cm x 6 cm) geschnitten und ausgeprüft.

Es wurden folgende tabellarisch aufgeführten Tintenschwimmzeiten gefunden. Als Vergleich diente ein alaunhaltiges, mit handelsüblichem Harzleim geleimtes Prüfpapier.

Le A 18 849

Tabelle

| Beispiel Nr.: | 7 | 8 | 9 | 10 | 11 | 12 | 13 | 14 | 15 | 16 |
|---|---|---|---|---|---|---|---|---|---|---|
| Vergleich | xx | xx | xx | | | | | | | |
| Leimungs-mittel | | | | 1 | 2 | 3 | 4 | 5 | 6 | 5 |
| Einsatz-menge % | 1 | 0,5 | 0,3 | 1 | 0,7 | 0,5 | 0,9 | 0,6 | 0,7 | 0,3 |
| Zeit (Min.) | 20 | 9 | 2 | 22 | 17 | 15 | 15 | 15 | 18 | 4 |

Die Ergebnisse der Tintenschwimmproben zeigen die deutlich bessere Leimungswirkung der erfindungsgemäßen Leimungsmittel auf kreidehaltigem Papier.

Beispiel 17

Die Prüfung erfolgt wie in Beispiel 11, das Papier enthält jedoch Kaolin anstelle von Kreide. Man mißt eine Tintenschwimmzeit von 20 Minuten.

Beispiel 18

Die Prüfung erfolgt wie in Beispiel 12. Das Papier enthält jedoch Talkum anstelle von Kreide. Man mißt eine Tintentschwimmzeit von 18 Minuten.

Le A 18 849

- 12 -

## Beispiel 19

Die Prüfung erfolgt wie in Beispiel 14. Das Papier enthält jedoch Holzschliff anstelle von Buchen-Sulfatzellstoff. Man mißt eine Tintenschwimmzeit von 13 Min.

## Beispiel 20

68 Teile des nach Beispiel 4 erhaltenen basischen Amids werden mit 320 Teilen Wasser auf ca. 100°C erhitzt. Unter gutem Rühren setzt man nun innerhalb von ca. 10 Min. 12 Teile Epichlorhydrin kontinuierlich hinzu. Dann wird noch 5 h bei ca. 100°C gut gerührt und dann unter Rühren abgekühlt.

Es entsteht eine ca. 20 %ige wäßrige Zubereitung des Leimungsmittels, in Form einer stabilen Emulsion. Die Tintenschwimmprobe wird analog Beispiel 14 durchgeführt und ergibt eine Zeit von 17 Min. Wenn das ausgerüstete Papier 5 Min. bei 120°C nacherhitzt wird, wird eine Tintenschwimmzeit von 25 Min. erreicht.

Le A 18 849

- 13 -

Patentansprüche

1. Leimungsmittel für Papier in Form einer wäßrigen Zubereitung von Salzen und/oder Quarternierungsprodukten von basischen Fettsäureamiden, die sich von Fettsäuren mit Schmelzpunkten von über 30$^{o}$C ableiten.

2. Leimungsmittel nach Anspruch 1, dadurch gekennzeichnet, daß als Fettsäure Stearinsäure bzw. Stearinsäure enthaltende Fettsäuregemische verwendet werden.

3. Leimungsmittel nach Anspruch 1 und 2, dadurch gekennzeichnet, daß zur Herstellung der Amide Äthylendiamin oder dessen Oligomere verwendet werden.

4. Leimungsmittel nach Anspruch 1 und 2, dadurch gekennzeichnet, daß zur Herstellung der Amide Bis-(3-aminopropyl)-methylamin verwendet wird.

5. Leimungsmittel nach Anspruch 1 bis 4, dadurch gekennzeichnet, daß zur Salzbildung Ameisen- und/oder Essigsäure verwendet werden.

6. Leimungsmittel nach Anspruch 1 bis 4, dadurch gekennzeichnet, daß als Quarternierungsmittel Epichlorhydrin verwendet wird.

**Le A 18 849**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - B - 1 012 165 (AMERICAN CYANAMID)<br><br>* Das ganze Dokument *<br><br>-- | 1-3,5, 6 |
| X | DE - C - 916 927 (BASF)<br><br>* Das ganze Dokument *<br><br>-- | 1,2,5 |
| | DE - B - 1 030 671 (ZSCHIMMER & SCHWARZ)<br><br>* Spalte 1, Zeilen 1-15,41-51; Beispiel 2 *<br><br>-- | 1,2,5 |
| | GB - A - 1 030 396 (I.C.I. ORGANICS)<br><br>* Seite 1, Zeile 11 bis Seite 2, Zeile 61; Beispiele 1,9,11,14 *<br><br>---- | 1,2,5 |

**KLASSIFIKATION DER ANMELDUNG (Int.Cl.²)**

D 21 H    3/12
C 07 C 103/00

**RECHERCHIERTE SACHGEBIETE (Int. Cl.²)**

D 21 H 3/12

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-06-1979 | NESTBY |

EPA form 1503.1  06.78